**Europäisches Patentamt**

**European Patent Office**

**Office européen des brevets**

(19)

(11) Veröffentlichungsnummer: **0 010 540**
**B1**

## (12) EUROPÄISCHE PATENTSCHRIFT

(45) Veröffentlichungstag der Patentschrift:
27.01.82

(21) Anmeldenummer: 79900015.3

(22) Anmeldetag: 14.12.78

(86) Internationale Anmeldenummer:
PCT/CH 78/00052

(87) Internationale Veröffentlichungsnummer:
WO 79/00553 (23.08.79 Gazette 79/17)

(51) Int. Cl.³: **F 16 H 57/04**, F 16 H 25/24

(54) **SCHRAUBGETRIEBE.**

(30) Priorität: 27.01.78 CH 924/78

(43) Veröffentlichungstag der Anmeldung:
14.05.80 Patentblatt 80/10

(45) Bekanntmachung des Hinweises auf die Patenterteilung:
27.01.82 Patentblatt 82/4

(84) Benannte Vertragsstaaten:
DE FR GB LU SE

(56) Entgegenhaltungen:
AT-B-3 315 04
DE-A-2 034 337
DE-C-1 907 28
US-A-2 708 374
US-A-3 428 297

(73) Patentinhaber: GREINER ELECTRONICS AG,
Gaswerkstrasse 33, CH-4900 Langenthal (CH)

(72) Erfinder: OBERLI, Rudolf, Murgenthalstrasse 30 F,
CH-4900 Langenthal (CH)

## Schraubgetriebe

Schraubgetriebe dienen zum Umwandeln einer rotierenden in eine gleichachsige lineare Bewegung, seltener umgekehrt. Angewandt werden sie beispielsweise bei elektrischen Hubvorrichtungen und an Werkzeugmaschinen. Dabei wird der Verschleiß an den aufeinander gleitenden Gewindeflanken umso geringer, die Lebensdauer umso höher, je besser die Schmierung ist. Aus praktischen Gründen sind Ölbäder nicht immer anwendbar, besonders wenn man bedenkt, daß die Spindeln solcher Getriebe oft mehrere Meter lang sein können und bei Hubgetrieben wechselnde Lagen einnehmen können. Bei Zentralschmiersystemen ergeben sich zum Teil ähnliche Schwierigkeiten; zudem sind solche Systeme aufwendig.

Natürlich kann man auch vorschreiben, daß die Schraubenspindel periodisch von Hand zu ölen oder zu fetten sei. Die entsprechenden Schmierintervalle sind jedoch schwer optimal festzulegen, zumal oft nicht bekannt ist, wie häufig das Getriebe arbeiten muß.

Bei dem Schraubgetriebe eines Ventils oder Schiebers gemäß der österreichischen Patentschrift AT-B 331 604 hat man deshalb einen Kolben in dem Hohlraum der ortsfesten Mutter untergebracht, welcher das Schmiermittel selbsttätig unter Druck setzen und zum Gewinde fördern soll, sobald die Gewindespindel bewegt wird. Zu diesem Zweck ist der Kolben auf einem zur Spindel koaxialen Stift befestigt, dessen eines Ende in einer zentralen Bohrung am Ende der Spindel verschiebbar eingesetzt und mit ihr auf Drehung verbunden ist, während das andere Ende des Stiftes mit einem zum Spindelgewinde gegensinnigen Gewinde versehen ist und in einer zentralen Gewindebohrung der Mutter eingesetzt laufen kann.

Diese Anordnung ist kompliziert und zudem bei langen Gewindespindeln nicht anwendbar.

Aufgabe der Erfindung ist es nun, ein Schraubgetriebe zu schaffen, welches einfach im Aufbau ist und unabhängig von Lage und Länge der Spindel durch die Bewegungen der letzteren selbsttätig geschmiert wird.

Demgemäß befaßt sich die Erfindung mit einem Schraubgetriebe gemäß dem Oberbegriff des Patentanspruchs 1, und die Aufgabe wird gemäß dem kennzeichnenden Teil dieses Anspruchs gelöst.

Es ist allerdings aus der USA.-Patentschrift 3 428 297 bei einem Schieber bekannt, einen Kolben mit einer Durchtrittsöffnung für die Spindel zu verwenden, um das Schmiermittel unter Druck zu setzen. Die Reibungsverhältnisse am Kolben sind jedoch unbestimmt, da der Druck nicht von der Spindelbewegung, sondern vom abzusperrenden Medium erzeugt wird. Fehlt ein solcher Druck von einem Medium, so fehlt im allgemeinen auch der Druck auf den Kolben und das Schmiermittel und es erfolgt keine selbsttätige Schmierung.

Der Patentanspruch 2 umschreibt eine Vorzugsausführung der Erfindung.

Aus der Arbeitsweise eines solchen Schraubgetriebes ergeben sich seine Vorteile gegenüber den bekannten Anordnungen:

Zu Beginn eines Arbeitshubes herrscht Haftreibung zwischen Spindel und Ringkolben, und der Ring beginnt mit der Spindel zu drehen und gegen die Endfläche des Hohlraums vorzurücken, vorerst ohne auf der Spindel zu gleiten. Indem alle etwaigen Hohlkehlen im Hohlraum, insbesondere die Gewindegänge vor dem Kolben vom Schmiermittel ausgefüllt werden, steigt der Gegendruck an und bremst den Kolben. Dieser beginnt nun auf der Spindel zu gleiten und bleibt hinter ihr zurück; er drückt aber weiterhin auf das Schmiermittel. Dadurch bildet sich auf einfachste Weise ein gleichmäßiger Schmierfilm, der sich unabhängig von Lage und Geschwindigkeit der Spindel praktisch über ihre ganze von der Mutter befahrenen Länge erstreckt.

Weitere vorteilhafte Einzelheiten ergeben sich aus der nachfolgenden Beschreibung zweier Ausführungsbeispiele der Erfindung und an Hand der Zeichnungen.

Fig. 1 zeigt in teilweiser Schnittansicht eine sehr einfache erste Ausführungsform mit nur einem Kolben;

Fig. 2 zeigt analog, aber aufwendiger, zwei Kolben.

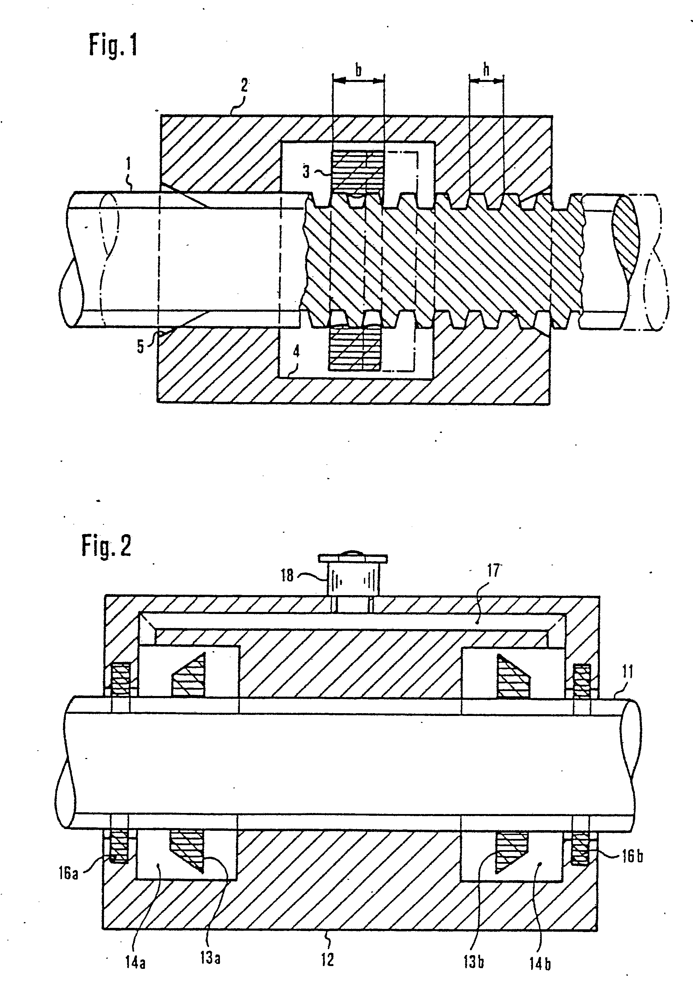

Das in Fig. 1 dargestellte Schraubgetriebe besteht nur aus drei Bauteilen, nämlich der Gewindespindel 1, der Mutter 2 und dem Ringkolben 3. Während Spindel 1 und Mutter 2 üblicherweise aus Stahl bzw. Bronze bestehen, ist der Kolben 3 vorzugsweise aus einem schmiermittelbeständigen Elastomer-Kunststoff oder Kunstgummi angefertigt. Sein Innendurchmesser ist im entspannten Zustand etwas kleiner als der Spindelgewinde-Außendurchmesser, hingegen sein Außendurchmesser auch im auf die Spindel 1 aufgespannten Zustand kleiner als der Durchmesser des Hohlraums 4 in der Mutter 2. Wenn der Gummiring 3 wie gezeichnet rechteckigen Querschnitt hat, besitzt auch der Hohlraum 4 ebene Endflächen. Das sich ergebende Übermaß bzw. Spiel zwischen Ring 3 und Spindel 1 bzw. Hohlraum 4 ist zur Verdeutlichung größer als in Wirklichkeit gezeichnet.

Infolge dieses Spiels besteht nur wenig Reibung zwischen dem Ring 3 und der zylindrischen Konfiguration des Hohlraumes 4, nämlich nur über eine Fettschicht, wogegen die leichte elastische Aufweitung des Ringes 4 durch die Spindel 1 die Reibung an diesem Sitz erhöht. Dadurch ergibt sich, daß der Kolben 3 gegenüber der Spindel 1 eine größere Reibungskopplung besitzt als gegenüber der Innenwand des Hohlraumes 4. Durch diesen Unterschied der Reibungskopplung innen/außen entstehen die bereits in der Einleitung erläuterten Druckwirkungen auf das in den Hohlraum 4 beidseits des Ringes 3 eingefüllte Schmiermittel.

Je nach Anwendungsfall sind die genauen Abmessungen und andere technische Daten zu wählen. Als Beispiel sind nachstehend einige dieser Daten zusammengestellt, bei welchen sich gute Resultate erzielen lassen:

Spindel 1:
    Trapezgewinde 26 mm Außendurchmesser
    4 mm Steigung (h)
Mutter 2:
    80 mm Länge,
    beidseits 2 × 30° angesenkt (5)
Hohlraum 4:
    18 mm lang, 38 mm Durchmesser
Ring 3:
    6 mm breit (b),
    25,9/36,5 mm Durchmesser (entspannt),
    Shore-Härte ca. 70 bis 75
Schmiermittel:
    Weiches Mehrzweckfett,
    Penetrationszahl 2
    Tropfpunkt 250° C

Zweck der an der Mutter angebrachten beidseitigen Ansenkung 5 ist, das Abstreifen des vom Kolben 3 auf die Spindel 1 aufgetragenen Schmierfilms bei der Gegenbewegung zu vermeiden. Auf der Hohlraum-Seite sind die Kanten nur leicht gebrochen.

Bei der in Fig. 1 gezeigten einfachsten Ausführung werden sowohl der Gummiring 3 als auch die Schmiermittelfüllung durch die Gewindebohrung der Mutter 2 eingeführt bzw. eingefüllt, bevor die Gewindespindel 1 ganz durch Ring 3 und Mutter 2 hindurchgedreht werden kann. Dies mag dort angehen, wo die Nachfüllung nie oder nur sehr selten zu erfolgen hat.

Fig. 2 zeigt demgegenüber eine verbesserte, aber auch aufwendigere Ausführungsvariante der Erfindung. Je zwei Ringkolben 13a und 13b bzw. Hohlräume 14a und 14b befinden sich beidseits des einzigen ununterbrochenen Gewindes der Mutter 12, und zwei Fettabstreifringe 16a und 16b sorgen für die Abdichtung nach außen. Die den Fettabstreifringen 16a und 16b benachbarten Enden der Hohlräume 14a und 14b sind durch einen Kanal 17 unter sich und mit einem Schmiernippel 18 verbunden. Dies gestattet ein bequemes Einfüllen des Schmiermittels selbst in einer nur kurzen Betriebspause. Weitere Verbesserungen oder Anpassungen an besondere Betriebsverhältnisse können dadurch erzielt werden, daß der Ringquerschnitt der beiden Kolben 13a und 13b nicht rechteckig, sondern trapezförmig angeschrägt oder lippenförmig ausgeführt wird.

Überhaupt sind Schraubgetriebe gemäß der Erfindung noch weiterer Abwandlungen fähig. So kann zur bequemeren Nachfüllung auch bei der Fig. 1 die Mutter 2 mit einem Schmiernippel analog 18 in Fig. 2 versehen werden. Die technischen Daten können von den oben aufgeführten abweichen, wenn dies nötig ist.

Unter Umständen können an Stelle von Elastomer-Ringkolben solche aus anderen Werkstoffen vorgesehen werden, z. B. Metalle in Verbindung mit Spannfedern, wobei sich aber weitere Komplikationen, wie die Auftrennbarkeit der Mutter, nicht immer vermeiden lassen. Solche Varianten sind jedoch nicht näher dargestellt, wie auch andere herstellungstechnische Einzelheiten.

**Patentansprüche**

1. Schraubgetriebe zum Umwandeln einer rotierenden in eine lineare Bewegung, bei welchem Gewindespindel (1, 11) und Mutter (2, 12) eine rotierende und axiale Bewegung relativ zueinander ausführen, wobei die Mutter (2, 12) mindestens einen Hohlraum (4, 14a, 14b) axial gleichbleibender Querschnitts-Konfiguration aufweist, in den mindestens einseitig die Gewindebohrung für die Spindel mündet und der mit Schmiermittel füllbar ist, und wobei außerdem in dem Hohlraum (4, 14a, 14b) ein Kolben (3, 13a, 13b) untergebracht ist, welcher den Hohlraum-Querschnitt ausfüllt, dadurch gekennzeichnet, daß der Kolben (3, 13a, 13b) eine Durchtrittsöffnung für die Spindel (1, 11) besitzt, und daß er mit einer Reibungskopplung auf der Spindel (1, 11) sitzt, die größer ist als die Reibungskopplung gegenüber der Hohlraum-Innenwand, so daß der Kolben bei Bewegung des Schraubgetriebes auf die Schmiermittelfüllung drückt.

2. Schraubgetriebe gemäß Patentanspruch 1, dadurch gekennzeichnet, daß der Hohlraum (4, 14a, 14b) eine kreiszylindrische Konfiguration aufweist, und daß der Kolben (3, 13a, 13b) als elastischer Kreisring von vorzugsweise rechteckigem oder trapezförmigem Querschnitt ausgebildet ist, wobei am Ring (3, 13a, 13b) der Innendurchmesser im entspannten Zustand kleiner ist als der Spindelgewinde-Außendurchmesser, und der Außendurchmesser kleiner ist als der Durchmesser des Hohlraums (4, 14a, 14b), wenn der Kolben (3, 13a, 13b) auf die Spindel (1, 11) gespannt ist.

**Claims**

1. A screw-and-nut gearing for converting a rotary movement into a linear movement, in which a screwthreaded spindle (1, 11) and a nut (2, 12) perform a rotary and axial movement relative to each other, wherein the nut (2, 12) has at least one cavity (4, 14a, 14b) which is of axially uniform cross-sectional configuration and into which the screwthreaded bore for the spindle opens at least at one end and which can be filled with lubricant, and wherein a piston (3, 13a, 13b) is also disposed in the cavity (4, 14a, 14b) and fills the cavity cross-section, characterised in that the piston (3, 13a, 13b) has an opening for the spindle (1, 11) to pass therethrough, and that it is

カ

0 010 540

carried on the spindle (1, 11) with a frictional coupling effect which is greater than the frictional coupling effect with respect to the inside surface of the cavity, so that, upon movement of the screw-and-nut gearing, the piston presses on to the filling of lubricant.

2. A screw-and-nut gearing according to claim 1 characterised in that the cavity (4, 14a, 14b) is of circular-cylindrical configuration and that the piston (3, 13a, 13b) is in the form of a resilient circular ring of preferably rectangular or trapezoidal cross-section, wherein the internal diameter of the ring (3, 13a, 13b), in the unstressed condition, is smaller than the external diameter of the spindle screwthread, and the external diameter is smaller than the diameter of the cavity (4, 14a, 14b) when the piston (3, 13a, 13b) is tightened on the spindle (1, 11).

**Revendications**

1. Mécanisme à vis et écrou pour transformer un mouvement rotatif en un mouvement linéaire, dans lequel la broche filetée (1; 11) et l'écrou (2; 12) effectuent un déplacement rotatif et axial l'un par rapport à l'autre, l'écrou (2; 12) présentant au moins une cavité (4; 14a, 14b) ayant une configuration de section constante dans le sens axial, dans laquelle débouche, au moins d'un côté, le taraudage pour la broche et qui peut être emplie de lubrifiant, un piston (3; 13a, 13b), qui comble la section de la cavité, étant en outre logé dans cette cavité (4; 14a, 14b), mécanisme caractérisé par le fait que le piston (3; 13a, 13b) possède une ouverture de passage pour la broche (1; 11), et par le fait qu'il est monté sur cette broche (1; 11) avec un accouplement à friction plus forte que celle qui s'exerce par rapport à la paroi interne de la cavité, de telle sorte que ce piston impose une pressin à la masse de lubrifiant contenue lors du déplacement du mécanisme à vis et écrou.

2. Mécanisme selon la revendication 1, caractérisé par le fait que la cavité (4; 14a, 14b) présente une configuration cylindrique droite, et par le fait que le piston (3; 13a, 13b) est réalisé sous la forme d'une bague élastique dont la section est de préférence rectangulaire ou trapézoïdale, ladite bague (3; 13a, 13b) ayant un diamètre interne qui, à l'état détendu, est plus petit que le diamètre externe du filetage de la broche et un diamètre externe qui est plus petit que le diamètre de la cavité (4; 14a, 14b) lorsque le piston (3; 13a, 13b) est serré sur la broche (1; 11).

## Fig. 1

## Fig. 2